# EUROPÄISCHE PATENTANMELDUNG

(11) **EP 1 525 993 A1**
(43) Veröffentlichungstag der Anmeldung: **27.04.2005**
(21) Anmeldenummer: 03450237.7
(22) Anmeldetag: 24.10.2003
(51) Int. Cl.: B41M 3/16

(54) **Verfahren zur Herstellung von Blindenschrift**

(71) Anmelder: TEICH Aktiengesellschaft, 3200 Weinburg (AT)
(72) Erfinder: Nekula, Lambert, 3202 Hofstetten (AT); Fellner, Markus, 3233 Kilb (AT); Kornfeld, Martin, 3400 Klosterneuburg (AT); Schedl, Adolf, 3200 Obergrafendorf (AT)
(74) Vertreter: Patentanwälte BARGER, PISO & PARTNER

(57) **Zusammenfassung**

Die Erfindung betrifft ein Verfahren zur Herstellung von aus Erhebungen bestehender Blindenschrift auf einem Trägermaterial wie Papier, Kunststoff oder Metall mittels eines Druckverfahrens, durch das ein Druckmaterial, das die Erhebungen bildet, aufgebracht wird.

Die Erfindung ist dadurch gekennzeichnet, dass als Druckmaterial Heißsiegellack und/oder Latex und/oder Wachse verwendet wird.

Diese Materialien lassen sich durch übliche Druckverfahren wie Flexo-Druckverfahren, UV-Flexo-Druckverfahren, Siebdruck, Tiefdruck oder Offsetdruck auf das Trägermaterial auftragen. Nach dem Drucken wird gegebenenfalls durch Warmluft das Trocknen bzw die Vergrößerung der aufgedruckten Punkte beschleunigt.

## Beschreibung

Die Erfindung betrifft ein Verfahren und eine Vorrichtung zur Herstellung von Blindenschrift auf den unterschiedlichsten Trägermaterialien wie Papier, Kunststoff oder Metall mittels eines Druckverfahrens.

Blindenschrift besteht aus einer Abfolge von Vorsprüngen auf einer ebenen Unterlage, so dass die Vorsprünge mit den Fingern ertastet werden können und bei entsprechender Übung zufolge Ihrer Anordnung innerhalb einer Matrix als Buchstaben interpretierbar sind. Es gibt verschiedene Blindenschriften, bei den die Abstände und Anordnungen der Erhebung unterschiedlich genormt sind, doch berührt dies nur die Verschlüsselung der Zeichen, nicht die Zeichen selbst. Die Grundkodierung beruht auf dem System von Louis Braille, der eine entsprechende Rasterung und Kodierung von jeweils sechs Punkten verwendet hat.

Bis heute werden die Vorsprünge der Schrift durch punzieren oder prägen mit speziellen Schreibmaschinen, Druckern oder ähnlichem hergestellt. Bei der Herstellung von Büchern in Blindenschrift werden Metallplatten mit Vertiefungen, gegebenenfalls mit Gegenplatten, geschaffen, die so stabil sind, dass sie eine entsprechend oftmalige Punzierung des schlußendlich verwendeten Papiers ermöglichen. Ein solches Prägeverfahren ist beispielsweise aus der US 6,247,400 B bekannt.

Um das Lesen von Nachrichten oder ähnlich aktuellen Texten zu ermöglichen, gibt es auch Geräte mit beweglichen Stiften, die an den für die Erhebungen vorgesehenen Stellen der Matrix angeordnet sind, sodass jeweils Zeile für Zeile (oder auch über mehrere Zeilen hinweg) ein Text durch Vorschieben der Stifte über die Unterlage oder Zurückziehen bis in die Höhe der Unterlage abgebildet wird und so das Abtasten erlauben.

Es sind auch verschiedene Versuche bekannt, Braille, wie eingangs ausgeführt, mit normaler Drucktechnik zu verbinden, so beispielsweise aus der EP 1 153 756 A, entsprechend der US 6,561,091 B, in der vorgeschlagen wird, eine normale Platte für das Offsetdrucken mit einer Gegenplatte zu kombinieren, die entsprechende Vertiefungen aufweist, in die beim Druckvorgang das Papier gepresst wird, wodurch im Papier die Vorsprünge der Blindenschrift entstehen.

Aus der US 5.627,578 A, der US 5,649,480 A und der WO 8707221 A sind Druckverfahren bekannt, bei denen spezielle Tinten verwendet werden, die dick genug aufgetragen werden können, um Erhebung, wie sie für die Blindenschrift notwendig sind, zu schaffen, wobei in der Folge ein spezielles Aushärteverfahren, meist durch Einwirkung von Strahlung (UV, etc.), notwendig ist, um die Erhebungen zu fixieren. Darüber hinaus ist es auch notwendig, spezielle Druckvorrichtungen zu verwenden, was nicht nur die Kosten des Druckes drastisch erhöht sondern, insbesondere in Verbindung mit dem notwendigen speziellen Aushärtevorgang, derartige Druckvorgänge verlangsamt. Daher sind diese Verfahren nur hochprofessionellen, großen Verlagshäusern bzw. Druckereien, zugänglich.

Es besteht somit trotz all dieser Versuche ein großer Bedarf an einem einfachen, verläßlichen und kostengünstigen Druckverfahren zur Herstellung von Blindenschrift. Es ist die Aufgabe der Erfindung, ein solches Verfahren bzw. eine solche Vorrichtung anzugeben.

Erfindungsgemäß wird diese Aufgabe dadurch gelöst, dass ein Druckverfahren angewandt wird und dass als Material, das die Erhebungen bildet, Heißsiegellack und/oder Latex und/oder Wachse verwendet wird.

Diese Stoffe können mittels üblicher Druckmaschinen sowohl gemäß dem Flexo-Druckverfahren, dem UV-Flexo-Druckverfahren, dem Siebdruck, dem Offsetdruck und auch vieler anderer Druckverfahren aufgetragen werden und benötigen zum Aushärten keinen zusätzlichen Behandlungsschritt, es erfolgt innerhalb von Sekunden bzw. Sekundenbruchteilen, somit innerhalb einer so kurzen Zeitspanne, die bei der üblichen Weiterverarbeitung der Bögen in der Druckerei stets zur Verfügung steht. Gegebenenfalls kann durch Anblasen mit einem Warmluftstrom oder durch das hindurch Führen durch einen Trockenkanal, durch Umlauf um eine Heiztrommel oder durch Vorbeigang an einem Infrarotstrahler die Aushärtezeit weiter verkürzt werden. Als Temperaturen kann man am Besten die Temperaturen des Trägermaterials angeben, diese liegen bevorzugt bei 30°C bis 280°C, besonders bevorzugt zwischen 80°C und 180°C. Beim UV-Flexo-Druckverfahren wird selbstverständlich ein Aushärten/Quellen durch UV bevorzugt.

Die Erwärmung ist insbesondere bei Verwendung von Lacksystemen, die auf Lösungsmitteln wie Wasser oder Aceton basieren, vorteilhaft, da dadurch das Lösungsmittel rasch verdampft. Darüberhinaus kann dadurch bei Verwendung von Quellmitteln im Druckmaterial das Aufquellen beschleunigt bzw. bewirkt werden, wodurch die Punkte der Braille besonders gut ertastbar werden.

Beim Tiefdruckverfahren kann erwärmtes, geschmolzenes Wachs, mit oder ohne mineralischen Füllstoffen, auf das Trägermaterial aufgebracht werden, die Temperaturen des Wachses liegen dabei zwischen 70°C und 200°C, bevorzugt zwischen 100°C und 130°C. Um das Erstarren des Wachses nach dem Aufbringen zu beschleunigen, kann das Trägermaterial mit Kaltluft angeblasen werden, es kann über Kühlwalzen geführt werden, bei langsamer Druckgeschwindigkeit kommt man ohne (zusätzliche) Kühlung aus.

Als Trägermaterial für die Aufbringung der Masse kann Papier, Kunststofffolie, auch mehrschichtig aufgebaut und/oder metallisiert, oder Metallfolie verwendet werden. Auf Grund der universellen Anwendbarkeit ist es ein Leichtes, eine Kombination von herkömmlichen Druck- und Blindenschrift zu erreichen, selbstverständlich können auch Graphiken oder Bilder in einem ersten Schritt auf das Trägermaterial aufgedruckt werden und das so bereits mit normalem Druck versehene Trägermaterial wird im zweiten, erfindungsgemäßen Schritt, mit Blindenschrift versehen.

Es ist nach dem Gesagten für den Fachmann leicht ersichtlich, dass die erfindungsgemäße Technik nicht nur für die für Herstellung von Blindenschrift geeignet ist, sondern auch für das Aufbringen von anderen erhabenen Bereichen auf dem Trägermaterial, so beispielsweise für Symbole, für Bilder, für Diagramme oder Balkendiagramme zur Darstellung von Graphen (Mathematikunterricht) und dergleichen mehr, dienen sie nun der Erkennung durch Blinde oder der Schaffung eigentümlicher profilierter und 3-dimensionaler Druckwerke.

### Zu den einzelnen Angaben kann folgendes ausgeführt werden:

Als Heißsiegellacke im Sinne der Erfindung werden Lacke auf der Basis der AcrylatCopolymere und der Ethylen-Vinylacetat-Copolymere angesehen. Diesen Lacken können verschiedene Zusätze zugefügt sein, beispielsweise ein Siliziumdioxid, wie es unter der Handelsbezeichnung SYLOID 622 von W.R. Grace & Co. erhältlich ist. Derartige Zusätze ermöglichen es, Punkte mit größerer Höhe als es ohne Zusätze möglich wäre, zu drucken. Ein anderer Typ von Zusätzen sind sogenannte "Quellzusätze", die bei geeigneter Nachbehandlung, beispielsweise Wärmeeinwirkung, die bereits gedruckten Punkte quellen lassen. Ein derartiger Zusatz ist beispielsweise unter der Bezeichnung FTV 120 von Beauvale Technologies Ltd. erhältlich, es handelt sich dabei um einen auf Wasser basierenden Decklack, der auch als Drucktinte und Zusatz zu derartigen Waren verwendet wird. Er besteht im wesentlichen aus Acrylat mit Pigmenten aus aufschäumbarem PVC.

Als Latex wird bevorzugt Naturlatex verwendet, solcher ist im Handel als Konzentrat, zumeist mit Ammoniak stabilisiert, unter den unterschiedlichsten Bezeichnungen, beispielsweise NEOTEX FA von Weber & Schaer erhältlich. Auch dem Latex können die oben angeführten Zusätze wie das Siliziumdioxid oder ein Quellzusatz zugefügt werden.

Als Wachse können eine ganze Reihe von natürlichen oder künstlichen Wachsen verwendet werden, dabei ist die Verwendung von Zusätzen von geringerer Bedeutung als bei den beiden erstgenannten Arten von Druckmaterialien. Als Beispiele seien das Glanzwachs FERUMELT RE, ein Beschichtungswachs, das ursprünglich für die Innenbeschichtung von Bonbonwicklern entwickelt wurde, von PARAMELT B.V. oder PROPERGLOSS, ebenfalls ein Glanzwachs vom gleichen Unternehmen, genannt. Beide Wachse gibt es in verschiedenen, hauptsächlich in der Viskosität unterschiedlichen Varianten. Selbstverständlich können eine Vielzahl anderer Wachse bis hin zum Paraffin verwendet werden.

In allen Fällen, mit gewissen Einschränkungen bei den Wachsen, kann dem Druckstoff Farbpigment zugesetzt werden, insbesondere wenn, wie oben erwähnt, Bilder, Graphiken, etc. erhaben gedruckt werden und nicht oder nicht ausschließlich für Blinde geschaffen werden.

Die benutzbaren Druckverfahren bedürfen nur einer Anpassung betreffend die auf das jeweilige Trägermaterial aufzubringende Menge an Druckstoff und gegebenenfalls an die etwas andere Viskosität des Druckmaterials. Beim Tiefdruckverfahren kann dies beispielsweise durch Anpassen des Volumens der Ausnehmungen, in denen üblicherweise die Drucktinte, beim erfindungsgemäßen Verfahren das Druckmaterial, bevorzugt flüssiges Wachs, eingebracht wird, geschehen.

Als Trägermaterial kommt, wie oben erwähnt, jedes Material in Frage, das durch das gewählte Druckverfahren bedruckt werden kann und auf dem das ausgewählte Druckmaterial ausreichend fest haftet. Ob diese Bedingungen erfüllt sind, kann der Fachmann mit einigen einfachen Tests in kurzer Zeit feststellen. Allgemein kann gesagt werden, dass Heißsiegellacke auf so gut wie allen Trägermaterialien hervorragend haften und, insbesondere durch Tiefdruckverfahren leicht und problemlos auftragbar sind.

## Patentansprüche

1. Verfahren zur Herstellung von aus Erhebungen bestehender Blindenschrift auf einem Trägermaterial wie Papier, Kunststoff oder Metall mittels eines Druckverfahrens, durch das ein Druckmaterial, das die Erhebungen bildet, aufgebracht wird, **dadurch gekennzeichnet, dass** als Druckmaterial Heißsiegellack und/oder Latex und/oder Wachs verwendet wird.

2. Verfahren nach Anspruch 1, **dadurch gekennzeichnet, dass** das Druckverfahren das Flexo-Druckverfahren, das UV-Flexo-Druckverfahren, der Siebdruck, der Tiefdruck oder der Offsetdruck ist.

3. Verfahren nach Anspruch 1 oder 2, **dadurch gekennzeichnet, dass** das Trägermaterial samt dem darauf aufgebrachten Druckmaterial nach dem Druckvorgang erwärmt wird.

4. Verfahren nach Anspruch 3, **dadurch gekennzeichnet, dass** die Erwärmung mit einem Luftstrom von 120°C bis 190°C, bevorzugt von 160°C bis 180°C erfolgt.

5. Verfahren nach Anspruch 3 oder 4, **dadurch gekennzeichnet, dass** das Erwärmen in einem Trockenkanal erfolgt.

6. Verfahren nach einem der Ansprüche 3 bis 5, **dadurch gekennzeichnet, dass** das Trägermaterial samt dem darauf aufgebrachten Druckmaterial nach dem Erwärmen durch Kontaktierung von Kühlwalzen abgekühlt wird.

7. Verfahren nach Anspruch 1, bei dem das Druckmaterial Wachs ist, **dadurch gekennzeichnet, dass** das Wachs geschmolzen mit einer Temperatur zwischen 70°C und 200°C, bevorzugt zwischen 100°C und 130°C, im Tiefdruckverfahren aufgebracht wird.

8. Verfahren nach Anspruch 7, **dadurch gekennzeichnet, dass** das Trägermaterial nach dem Aufbringen des Druckmaterials, beispielsweise durch Anbasen mit Kühlluft oder Kontakt mit einer Kühlwalze, abgekühlt wird.

9. Verfahren nach einem der voranstehenden Ansprüche, **dadurch gekennzeichnet, dass** dem Druckmaterial ein Quellstoff, beispielsweise ein Acrylat mit Pigmenten aus aufschäumbarem PVC, zugesetzt ist.
